# EUROPEAN PATENT APPLICATION

(11) **EP 4 579 197 A1**
(43) Date of publication of application: **02.07.2025**
(21) Application number: 23886293.2
(22) Date of filing: 01.11.2023
(51) Int. Cl.: G01F 1/688, G01F 15/00, G01F 15/18, H01M 10/42

(54) **APPARATUS FOR MEASURING FLOW RATE OF VENTING GAS OF SECONDARY BATTERY CELL DEVICE AND MEASURING METHOD USING SAME**

(30) Priority: 02.11.2022 KR 20220144750
(71) Applicant: LG Energy Solution, Ltd., Seoul 07335 (KR)
(72) Inventor: JUNG, Hyeran, Daejeon 34122 (KR); LEE, Hanyoung, Daejeon 34122 (KR); LEE, Su Rim, Daejeon 34122 (KR); LEE, Kyungmin, Daejeon 34122 (KR)
(74) Representative: Goddar, Heinz J.
(86) International application number: PCT/KR2023/017313
(87) International publication number: WO 2024/096597

(57) **Abstract**

A device for measuring a flow rate of gas in a secondary cell according to an embodiment of the present disclosure includes a chamber accommodating the secondary cell, and a flow rate measurement unit connected to an outlet of the chamber and having a shape of a pipe.

## Description

### [Technical Field]

### CROSS-REFERENCE TO RELATED APPLICATION

This application claims priority to and the benefit of Korean Patent Application No. 10-2022-0144750 filed in the Korean Intellectual Property Office on November 2, 2022, the entire contents of which are incorporated herein by reference.

The present disclosure relates to a safety measurement device of a secondary cell, and more specifically, to a device and method for measuring safety by measuring the flow rate of gas generated upon ignition with respect to a single secondary cell.

### [Background Art]

In modern society, as the use of portable devices such as mobile phones, laptops, camcorders, digital cameras, etc. has become commonplace, the development of technologies in the field related to the above mobile devices has become more active. In addition, rechargeable secondary cells are used as power sources of electric vehicles (EVs), hybrid electric vehicles (HEVs), plug-in hybrid electric vehicles (P-HEVs), etc. to solve air pollution such as the existing gasoline vehicles using fossil fuels, and thus, the need for development of secondary cells is increasing.

Currently commercialized secondary cells include nickel cadmium batteries, nickel hydrogen batteries, nickel zinc batteries, lithium secondary cells, etc. Among these, lithium secondary cells rarely have a memory effect compared to nickel-based secondary cells, and thus, lithium secondary cells have been spotlighted owing to the advantages of free charging and discharging, very low self-discharge rate, and high energy density.

These lithium secondary cells mainly use lithium-based oxide and carbon material as positive electrode active materials and negative electrode active materials, respectively. A lithium secondary cell includes an electrode assembly in which a positive electrode plate and a negative electrode plate respectively coated with a positive electrode active material and a negative electrode active material are disposed with a separator therebetween, and a battery case, that seals and accommodates the electrode assembly together with an electrolyte.

Generally, lithium secondary cells may be classified into can-type secondary cells in which an electrode assembly is built into a metal can and pouch-type secondary cells in which an electrode assembly is built in a pouch of an aluminum laminate sheet, according to the shape of an exterior material.

In the case of secondary cells used in small devices, 2 or 3 battery cells are disposed, but in the case of secondary cells used in medium to large devices such as automobiles, battery modules in which a number of battery cells are electrically connected are used. These battery modules have improved capacity and output by connecting the number of battery cells in series or parallel and forming a battery cell assembly. One or more battery modules may be mounted with various control and protection systems such as a battery disconnect unit (BDU), a battery management system (BMS), a cooling system, etc. to form a battery pack.

In particular, recently, owing to the development of high-capacity cells, the safety of secondary cells, especially thermal propagation characteristic, has been recognized as important. These safety characteristics may be achieved by simulating an overcharge or overheating state for a secondary cell and analyzing gas generated during ignition. At this time, when analyzing a large number of secondary cells at once, there are problem in that it is difficult to compare characteristics of the secondary cells and an accurate analysis is difficult. Accordingly, there is a need for the development of devices and methods capable of accurately analyzing gas generated during overcharging and overheating with respect to a single secondary cell (single cell).

### [Disclosure]

### [Technical Problem]

The present disclosure attempts to provide a device and method capable of accurately analyzing gas generated during overcharging and overheating with a simple structure so as to evaluate thermal propagation characteristics of a single secondary cell.

However, the problems to be solved by the embodiments of the present disclosure are not limited to the above-mentioned problems and may be expanded in various ways within the scope of the technical idea included in the present disclosure.

### [Technical Solution]

A device for measuring a flow rate of gas in a secondary cell according to an embodiment of the present disclosure may include a chamber accommodating the secondary cell, and a flow rate measurement unit connected to an outlet of the chamber and having a shape of a pipe.

A length of the flow rate measurement unit may be 800 mm to 2,000 mm.

A diameter of the flow rate measurement unit may be 2.5 cm to 13 cm.

A volume of a remaining space in the chamber after the secondary cell may be accommodated is 0.1 L to 5 L.

The chamber may have a rectangular hexahedral box shape.

The chamber and the pipe may be made of aluminum or stainless steel.

A method of measuring a flow rate of gas in a secondary cell according to another embodiment of the present disclosure may include accommodating the secondary cell in a chamber, inducing ignition in the secondary cell by increasing a temperature inside the chamber, and measuring a temperature of the gas generated from the secondary cell by the ignition, wherein the gas is discharged to a flow rate measurement unit connected to an outlet of the chamber and having a shape of a pipe.

The gas discharged from the flow rate measurement unit may include only the gas generated from the secondary cell without a mixture of separate carrier gas.

More than 95 % of the gas generated from the secondary cell may be discharged to the flow rate measurement unit.

One to four secondary cells may be accommodated in the chamber.

### [Advantageous Effects]

According to embodiments of the present disclosure, the device and method capable of accurately analyzing gas generated during overcharging and overheating with a simple structure so as to evaluate thermal propagation characteristics of a single secondary cell may be provided.

The effects of the present disclosure are not limited to the above-mentioned effects, and other effects not mentioned will be clearly understood by those skilled in the art from the description of the claims.

### [Description of the Drawings]

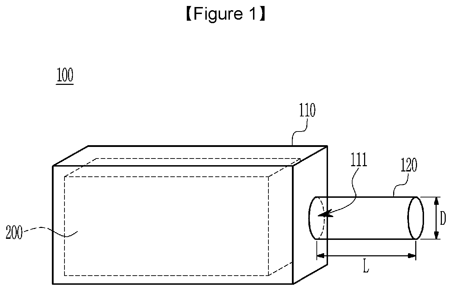

FIG. 1 is a diagram showing a device for measuring the flow rate of gas in a secondary cell according to an embodiment of the present disclosure.

### [Mode for Invention]

The present disclosure will be described more fully hereinafter with reference to the accompanying drawings, so that those skilled in the art to which the present disclosure pertains may easily implement the embodiments of the present disclosure. However, the present disclosure may be implemented in many different forms and is not limited to the embodiments described herein.

In order to clearly describe the present disclosure, parts irrelevant to the description are omitted, and the same reference numerals are denoted by the same or similar components throughout the specification.

In addition, since the size and thickness of each component shown in the drawings are arbitrarily shown for convenience of explanation, the present disclosure is not necessarily limited to those as shown. In the drawings, the thickness is shown enlarged to clearly express the various layers and regions. Also, in the drawings, for convenience of explanation, the thicknesses of some layers and regions are exaggerated.

In addition, It will be understood that when an element such as a layer, film, region, or substrate is referred to as being "on" another element, it may be directly on the other element or intervening elements may also be present. In contrast, when an element is referred to as being "directly on" another element, there are no intervening elements present. In addition, being "above" or "on" a reference part means being above or below the reference part, and does not necessarily mean being "above" or "on" in the opposite direction of gravity.

In addition, throughout the specification, when a portion "includes" a certain component, it means that the portion may further include other components without excluding other components unless otherwise stated.

In addition, throughout the specification, when it is referred to as "on a plane", it means when the target portion is viewed from above, and when it is referred to as "on a cross-section", it means when a cross section of the target portion cut vertically is viewed from the side.

Hereinafter, a device for analyzing gas in a secondary cell is described with reference to FIG. 1.

FIG. 1 is a diagram showing a device for measuring the flow rate of gas in a secondary cell according to an embodiment of the present disclosure.

The device 100 for analyzing gas in a secondary cell 200 is configured to analyze the gas discharged from the secondary cell 200.

The device 100 for analyzing the gas in the secondary cell 200 includes a chamber 110 accommodating the secondary cell 200 and a flow rate measurement unit 120 having the shape of a pipe to serve as a passage for the gas discharged from the secondary cell 200. In addition, although not shown, the device 100 may further include an overload means (not shown) mounted inside or outside the chamber 110 to increase the internal temperature and a flow meter (not shown) mounted inside or outside the flow rate measurement unit 120 to measure the flow rate.

The chamber 110 is configured to accommodate the secondary cell 200, which is an analysis object. For example, the chamber 110 may have a rectangular hexahedral box shape with a space inside, as shown in FIG. 1. The chamber 110 may be made of aluminum or stainless steel to withstand heat, etc.

The size of the space inside the chamber 110 may be set such that only single secondary cell 200 is accommodated. At this time, the size of the inside space is set such that the volume of the remaining portion after the single secondary cell 200 is accommodated is 0.1 L to 5 L. When the volume exceeds 5 L and is too large compared to the size of the secondary cell 200, while generated high-temperature gas passes through the space, part of the high-temperature gas may phase change into liquid, and because of this, the amount of the gas measured by the flow rate measurement unit 120 may be smaller than the flow rate of the actually generated high-temperature gas. Therefore, an accurate measurement is difficult, and thus, it is necessary to limit the remaining volume after the secondary cell 200 is accommodated to the above range.

In addition, only the single secondary cell 200 is accommodated inside the chamber 110 and characteristics thereof may be evaluated. Conventionally, thermal propagation characteristics were simulated and measured in a stack or module state in which a plurality of secondary cells 200 are stacked, but in this case, the scale of ignition increases and the amount of generated gas also increases, which cause a problem in that it is difficult to ensure safety in an experimental stage. For this reason, in the present embodiment, one to four secondary cells 200 are accommodated in the chamber 110 and the flow rate of gas thereof is measured upon ignition.

An outlet 111 through which the high-temperature gas generated from the secondary cell 200 is discharged is formed on one side of the chamber 110, and the flow rate measurement unit 120 having the shape of a pipe is connected to the outlet 111. The flow rate measurement unit 120 is formed in the shape of the pipe such that the high-temperature gas generated from the secondary cell 200 may pass therethrough.

A flow meter capable of measuring the flow rate of the gas passing through the flow rate measurement unit 120 may be provided inside or outside the flow rate measurement unit 120. The flow rate measurement unit 120 may also be made of a material that may withstand heat and pressure, for example, aluminum or stainless steel. The flow rate measurement unit 120 may be located in the center of one side of the chamber 110 in the box shape, and may be formed in only one direction or in both directions as shown in FIG. 1. However, at this time, the flow rate measurement unit 120 is configured only to discharge gas, and in the present embodiment, measures the flow rate without introducing separate carrier gas, etc. for measurement of the flow rate.

A length L of the flow rate measurement unit 120 may be 800 mm to 2000 mm, and a diameter D may be 2.5 cm to 13 cm. Within the range, the length L and the diameter D of the flow rate measurement unit 120 may be appropriately changed according to the size of the chamber 110. That is, as the chamber 110 becomes smaller, the length L and the diameter D may become smaller. In addition, when the length L of the flow rate measurement unit 120 is set to 800 mm to 2000 mm and the diameter D thereof is set to 2.5 cm to 13 cm, because the gas generated from the secondary cell 200 maintains the initial generation temperature and passes through the flow rate measurement unit 120, the flow rate of the generated gas may be accurately measured. That is, when the length L of the flow rate measurement unit 120 increases and the diameter D thereof decreases, there is a problem in that the flow rate is lost during a process of passing through the flow rate measurement unit 120 and the flow rate is measured to be smaller than the actual flow rate. Therefore, for accurate flow rate measurement, the length L and the diameter D of the flow rate measurement unit 120 may be controlled within the above range.

According to the device for measuring the flow rate of gas of the present embodiment as described above, the flow rate of the discharged gas may be accurately measured without loss of the flow rate of the generated gas with respect to the single secondary cell 200.

Next, a method of measuring the flow rate of the gas in the secondary cell 200 according to another embodiment of the present disclosure will be described with reference to FIG. 1.

First, the single secondary cell 200 is located inside the chamber 110. At this time, the flow rate of only the single secondary cell 200 rather than several secondary cells is measured, and thus, safety is improved and each battery cell may be evaluated. In addition, compared to the case where a simulation experiment is performed on the multiple secondary cells 200 at once, the time and energy required for heating for ignition may be reduced.

Next, the internal temperature is increased by an overload means (not shown) mounted inside or outside the chamber 110. In the present embodiment, only heating by the overload means is described as an example, but the present embodiment is not limited thereto, and an overload may also be induced in the secondary cell 200 by causing an overcharge state. When the overload is induced in the secondary cell 200 by heating, etc., the secondary cell 200 emits high-temperature gas.

When the high-temperature gas is emitted, all of the high-temperature gas passes through the flow rate measurement unit 120 via the outlet 111. Flow rate measurement and temperature measurement are performed on the high-temperature gas passing through the flow rate measurement unit 120 using a flow meter. At this time, the flow rate is measured by allowing all of the generated gas to pass through the flow rate measurement unit 120 without introducing separate reference gas (carrier gas) to measure the flow rate of the high-temperature gas emitted from the secondary cell 200, and thus, the flow rate may be accurately measured in a simple way without loss of the generated gas. In other words, when the carrier gas, etc. is introduced, not only does the process is complicated, but also the actually measured flow rate may be reduced by liquefying part of the high-temperature gas in a process of mixing the carrier gas with other gases. In addition, as described above, in the present embodiment, the volume of the remaining space inside the chamber 110 excluding the secondary cell 200 is limited to 0.1 L to 5 L, and the length L and the diameter D of the flow rate measurement unit 120 are limited to 800 mm to 2000 mm and 2.5 cm to 13 cm, respectively, thereby also preventing the high-temperature gas from liquefying in the remaining space or while passing through the flow rate measurement unit 120.

Next, the characteristics of the generated gas are analyzed with reference to the flow rate or temperature measured by the flow rate measurement unit 120. For example, based on the degree of a specified flow rate, it is possible to predict whether thermal propagation characteristics are improved.

As described above, according to the method of measuring the flow rate of the gas in the secondary cell 200 according to the present embodiment, the flow rate of the generated high-temperature gas may be accurately measured without loss through a simple structure and method.

Although the embodiments of the present disclosure have been described in detail above, the scope of the present disclosure is not limited thereto, and various modifications and improvements made by those of ordinary skill in the field to which the present disclosure pertains also belong to the scope of the present disclosure.

### [Description of Reference Numerals]

- 100:: device for measuring flow rate of gas
- 200:: secondary cell
- 110:: chamber
- 111:: outlet
- 120:: flow rate measurement unit

## Claims

1. A device for measuring a flow rate of gas in a secondary cell, the device comprising:
a chamber accommodating the secondary cell; and
a flow rate measurement unit connected to an outlet of the chamber and having a shape of a pipe.

2. The device of claim 1, wherein:
a length of the flow rate measurement unit is 800 mm to 2,000 mm.

3. The device of claim 1, wherein:
a diameter of the flow rate measurement unit is 2.5 cm to 13 cm.

4. The device of claim 3, wherein:
a volume of a remaining space in the chamber after the secondary cell is accommodated is 0.1 L to 5 L.

5. The device of claim 1, wherein:
the chamber has a rectangular hexahedral box shape.

6. The device of claim 1, wherein:
the chamber and the pipe are made of aluminum or stainless steel.

7. A method of measuring a flow rate of gas in a secondary cell, the method comprising:
accommodating the secondary cell in a chamber;
inducing ignition in the secondary cell by increasing a temperature inside the chamber; and
measuring a temperature of the gas generated from the secondary cell by the ignition,
wherein the gas is discharged to a flow rate measurement unit connected to an outlet of the chamber and having a shape of a pipe.

8. The method of claim 7, wherein:
the gas discharged from the flow rate measurement unit includes only the gas generated from the secondary cell without a mixture of separate carrier gas.

9. The method of claim 7, wherein:
more than 95 % of the gas generated from the secondary cell is discharged to the flow rate measurement unit.

10. The method of claim 7, wherein:
one to four secondary cells are accommodated in the chamber.
